# EUROPÄISCHE PATENTSCHRIFT

(11) **EP 1 192 058 B1**
(45) Veröffentlichungstag und Bekanntmachung des Hinweises auf die Patenterteilung: **20.11.2002**
(21) Anmeldenummer: 00949291.9
(22) Anmeldetag: 07.07.2000
(51) Int. Cl.: B60K 7/00, B60K 17/04

(54) **ACHSE MIT EINER UNTERHALB DER RADACHSE ANGEORDNETEN ACHSBRÜCKE**
AXLE HAVING A BRIDGE ARRANGED UNDERNEATH THE WHEEL AXLE
PONT COMPORTANT UN CORPS DE PONT SITUE SOUS L'ESSIEU

(30) Priorität: 13.07.1999 DE 19932586
(43) Veröffentlichungstag der Anmeldung: 03.04.2002
(73) Patentinhaber: ZF FRIEDRICHSHAFEN Aktiengesellschaft, 88038 Friedrichshafen (DE)
(72) Erfinder: WENDL, Harald, D-94474 Vilshofen (DE); ROSKE, Michael, D-88046 Friedrichshafen (DE); BACHMANN, Max, D-88339 Bad Waldsee (DE)
(86) Internationale Anmeldenummer: EP0006481
(87) Internationale Veröffentlichungsnummer: WO01003963

(56) Entgegenhaltungen:
- EP-A- 0 509 221
- WO-A-98/40235
- DE-A- 1 930 501
- DE-A- 19 501 512
- DE-A- 19 709 577
- DE-B- 1 227 783
- DE-U- 29 518 401
- US-A- 5 161 813

## Beschreibung

Die Erfindung bezieht sich auf eine Achse mit einer unterhalb der Radachse angeordneten Achsbrücke, wie sie vorzugsweise in Niederflur-Omnibussen Verwendung findet. Um einen möglichst tiefen Einstieg in den Omnibus zu bekommen, ist die Achsbrücke der Achse gegenüber der Radachse tiefer angeordnet. Um flexible Antriebskonzepte verwirklichen zu können, ist es vorteilhaft, jedes angetriebene Rad über einen am Rad befindlichen Antriebsmotor anzutreiben. Die Breite dieses Antriebes bestimmt die Gangbreite im Omnibus, welche eine Mindestbreite nicht unterschreiten darf. Deshalb ist es notwendig, den größten Teil des Radantriebs sowie der Bremse des Rades innerhalb der Felge des Rades unterzubringen.

Aus der deutschen Patentschrift 1 227 783 ist eine Achse mit einem Radantrieb bekannt, bei welcher als Antriebsmotor ein Elektromotor verwendet wird, welcher koaxial ein inneres Zentralrad einer ersten Planetenstufe antreibt, deren Steg ein inneres Zentralrad einer zweiten Planetenstufe antreibt, deren Steg mit dem Rad in Verbindung steht. Als Bremse ist eine Trommelbremse offenbart, welche koaxial um den Elektromotor angeordnet ist. Die Radkräfte werden über das Gehäuse des Elektromotors in ein Aufnahmeteil der Achsbrücke, in welches der Elektromotor eingeschoben ist, übertragen. Indem das Gehäuse des Elektromotors in das Aufnahmeteil der Achsbrücke eingeschoben und mit dieser drehfest verbunden ist, besteht die Möglichkeit des Verschleißes der Verbindungspassung zwischen Elektromotorgehäuse und Aufnahmeteil infolge hoher Krafteinwirkung durch die Radkraft oder Kontaktkorrosion der Passung. Des weiteren ist die Verwendung einer Scheibenbremse anstelle der Trommelbremse innerhalb der Felge nicht möglich, da der Bauraum für die Betätigungseinrichtung der Scheibenbremse innerhalb der Felge nicht gegeben ist. Bei Verwendung einer Scheibenbremse würde sich dieser Antrieb erheblich verlängern, was zu einer geringen Gangbreite im Omnibus führen würde.

Das deutsche Gebrauchsmuster DE 295 18 401 U1 offenbart eine Achse, bei welcher ein Rad über einen Elektromotor angetrieben wird, wobei der Elektromotor sich in der Achsbrücke befindet. Die Achsbrücke ist unterhalb der Radachse angeordnet. Da sich der Elektromotor jedoch in der Achsbrücke befindet, benötigt die Achsbrücke im Bereich des Elektromotors ausreichende Bauhöhe, um den Elektromotor aufzunehmen,- was sich nachteilig auf die Einstiegshöhe des Omnibus auswirkt.

Die WO 98/40235 offenbart eine Antriebsanordnung, insbesondere für Omnibusse, bei welcher jedes Rad einer Achse von mindestens einem Elektromotor angetrieben wird. Die Lenker und Federträger sind mit der Achsbrücke verbunden, wobei die Achsbrücke einen Portalabstand aufweist. Der Antriebsmotor ist völlig außerhalb der Radfelge angeordnet, wodurch der Antrieb einen erheblichen Bauraum benötigt.

Aus der EP 509 221 A2 ist eine Antriebsachse gemäß dem Oberbegriff des Anspruchs 1 für ein Straßenfahrzeug bekannt, die als Radnabenmotoren ausgebildete Elektromotoren, Außenplanstengetriebe, Bremsen, Scheibenräder und Reifen aufweist.
Zwischen Antriebswelle und E-Motor ist ein Untersetzungsgetriebe vorgesehen. Das Gehäuse des Untersetzungsgetriebes ist mit einem Achsstummel und E-Motor fest verbunden. Der E-Motor ist auf der Achsbrücke befestigt. Die dargestellte Antriebsachse weist eine Trommelbremse auf, die Nachteile hinsichtlich axialer Baulänge und Bremsverzögerung bei thermischer Belastung mit sich bringt.

Der vorliegenden Erfindung liegt die Aufgabe zugrunde, eine Achse, vorzugsweise für Niederflur-Omnibusse zu schaffen, bei welcher jedes Rad über einen Antriebsmotor angetrieben wird, das Rad über eine Scheibenbremse abbremsbar und die Achse so gestaltet ist, daß der Radantrieb größtenteils in der Felge untergebracht werden kann, und die Achsbrücke nur eine geringe Höhe benötigt, um eine möglichst große Gangbreite sowie einen niedrigen Einstieg in den Niederflur-Omnibus zu bekommen.

Die Aufgabe wird mit einer, auch die kennzeichnenden Merkmale des Hauptanspruchs aufweisenden, gattungsgemäßen Achse gelöst.

Erfindungsgemäß besteht die Achse aus einer unterhalb der Radachse angeordneten Achsbrücke und Antriebsrädern, welche jeweils mit einem Antriebsmotor, vorzugsweise einem Elektromotor, oder einem hydraulischen Motor angetrieben werden. Großteils innerhalb der Radfelge befindet sich eine Scheibenbremse, welche über eine Betätigungseinrichtung betätigt wird. Der Antriebsmotor weist einen Achsversatz zur Radachse auf, wodurch entgegen dem Achsversatz ein Bauraum entsteht, in welchen zwischen Felge und Antriebsmotor die Bremse und deren Betätigungseinrichtung eingebaut werden kann. Der Achsversatz des Antriebsmotors zur Radachse ist vorzugsweise nach unten ausgebildet, kann jedoch auch in oder entgegen der Fahrtrichtung ausgebildet sein, wodurch sich die Lage der Betätigungseinrichtung der Bremse ebenfalls verschiebt. Um einen größtmöglichen Achsabstand zu schaffen, wird vorzugsweise ein Untersetzungsgetriebe gewählt, bei welchem das Antriebsrad, welches vom Antriebsmotor angetrieben wird, einerseits mit einem Hohlrad und andererseits mit einem oder zwei Zwischenrädern kämmt, welche ebenfalls über ein Zwischenrad das Hohlrad antreiben. Der Achsabstand kann aber auch über andere Untersetzungsgetriebe realisiert werden. Das Hohlrad ist vorzugsweise über eine weitere Planetenstufe mit dem Abtrieb verbunden. Indem beim ersten Untersetzungsgetriebe das vom Antriebsmotor angetriebene Zahnrad mit dem Hohlrad kämmt, wird ein größtmöglicher Achsabstand erreicht und indem das vom Antriebsmotor angetriebene Zahnrad noch mit einem oder zwei weiteren Zwischenrädern kämmt, kann das erste Untersetzungsgetriebe sehr kompakt ausgeführt werden, da die vom Antriebsmotor erzeugten Drehmomente auf mehrere Zahneingriffe verteilt werden. Das Gehäuse des Antriebsmotors ist einerseits drehfest mit dem Nabenträger der Achse, welcher die Radkräfte aufnimmt, verbunden und andererseits weist das Gehäuse des Antriebsmotors Befestigungsmittel auf, an welchen die Achsbrücke sowie Aufhängungselemente der Achse und Lenker angebracht werden können. Die Aufhängungselemente der Achse und das Gehäuse des Antriebsmotors können auch einstückig ausgeführt sein. Indem das Gehäuse des Elektromotors die Radkräfte aufnimmt und über die Aufhängungselemente und Lenker sowie die Achsbrücke weitergibt, ist es möglich, den Achsversatz des Antriebsmotors zur Radachse so groß zu wählen, daß die Scheibenbremse sowie ein großer Teil der Betätigungseinrichtung der Scheibenbremse innerhalb der Radfelge eingebaut werden kann. Da das erste Untersetzungsgetriebe sehr kompakt ausgeführt werden kann, ist es möglich, einen Teil des Antriebsmotors innerhalb der Felge anzuordnen, wodurch ein sehr kompakter Antrieb sowie eine große Gangbreite im Omnibus realisiert werden kann. Das Gehäuse des Elektromotors überträgt die gesamten Radkräfte. Dadurch muß die Achsbrücke nicht direkt mit der Radnabe verbunden werden, wodurch das Gewicht des Radantriebs reduziert wird und durch die Reduktion der ungefederten Massen eine Verbesserung des Fahrverhaltens und eine Schonung der Straßendecke eintritt. Indem die Achsbrücke das Gehäuse des Antriebsmotors nicht umschließt und direkt mit der Radnabe verbunden ist, ist es möglich, das Gehäuse des Antriebsmotors so zu gestalten, daß der Motor über innen- oder außenliegende Luftkanäle gekühlt werden kann sowie die Anbringung der Energiezufuhr für den Antriebsmotor frei wählbar ist. Die Achsbrücke ist vorzugsweise als Rechteckprofil ausgeführt, wodurch eine geringe Höhe der Achsbrücke entsteht, wodurch ein niedriger Einstieg in den Omnibus realisiert werden kann. An der Achsbrücke sind untenliegende Schräglenker angebracht, welche über eine angeschweißte Platte flexibel an der Achsbrücke befestigt werden können. Die Platte kann auch anschraubbar oder angegossen ausgeführt sein. Indem der Radantrieb über zwei Untersetzungsgetriebe verfügt, welche vorzugsweise schrägverzahnt ausgeführt sind, kann ein sehr kompakter, in seiner Baulänge und seinem Durchmesser gering bauender Antriebsmotor verwendet werden. Durch die Verwendung von schrägverzahnten Untersetzungsgetrieben wird ein geräuscharmer Antrieb geschaffen.

Weitere Ausgestaltungen sind den Figuren-Beschreibungen zu entnehmen.
Es zeigen:

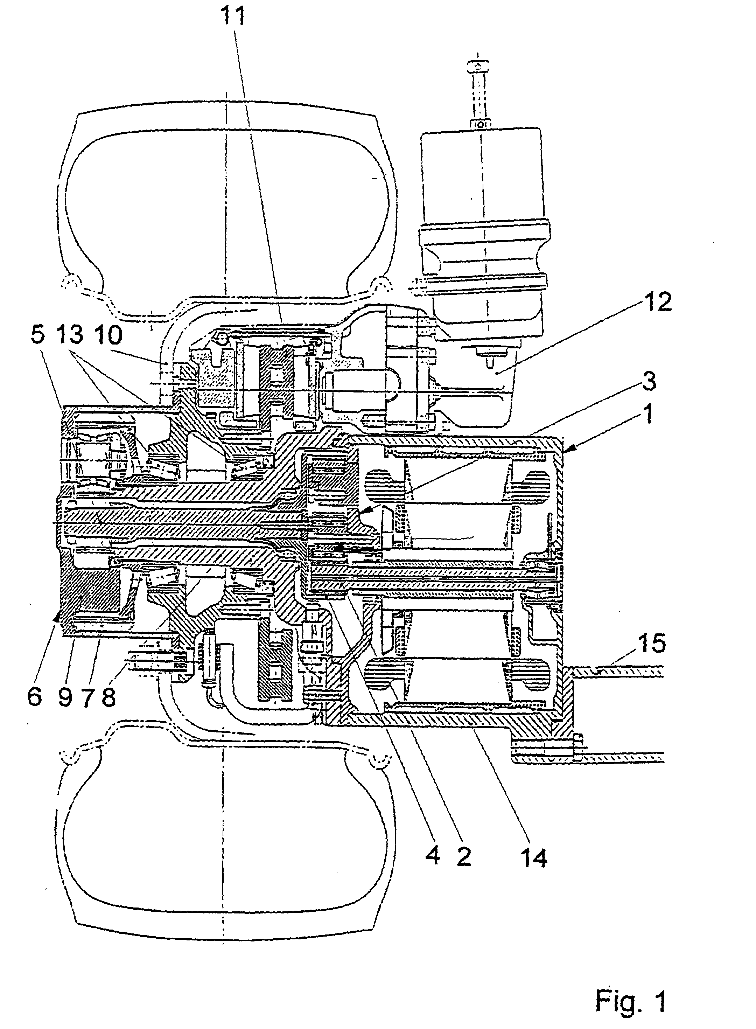

- Fig. 1: einen Schnitt durch eine Achse mit einem elektrisch angetriebenen Radantrieb;

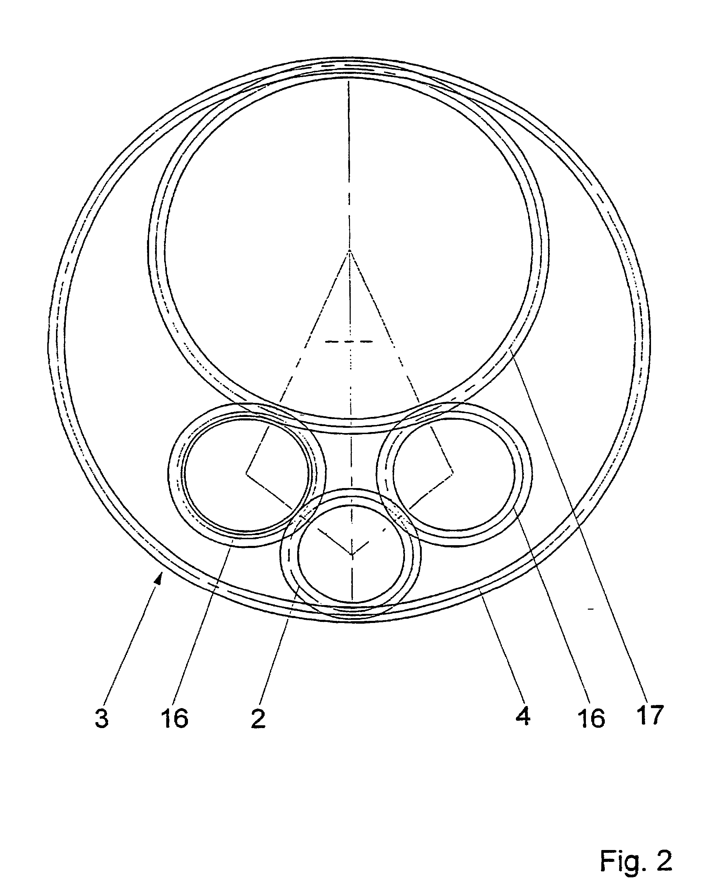

- Fig. 2: ein Schema des ersten Untersetzungsgetriebes;

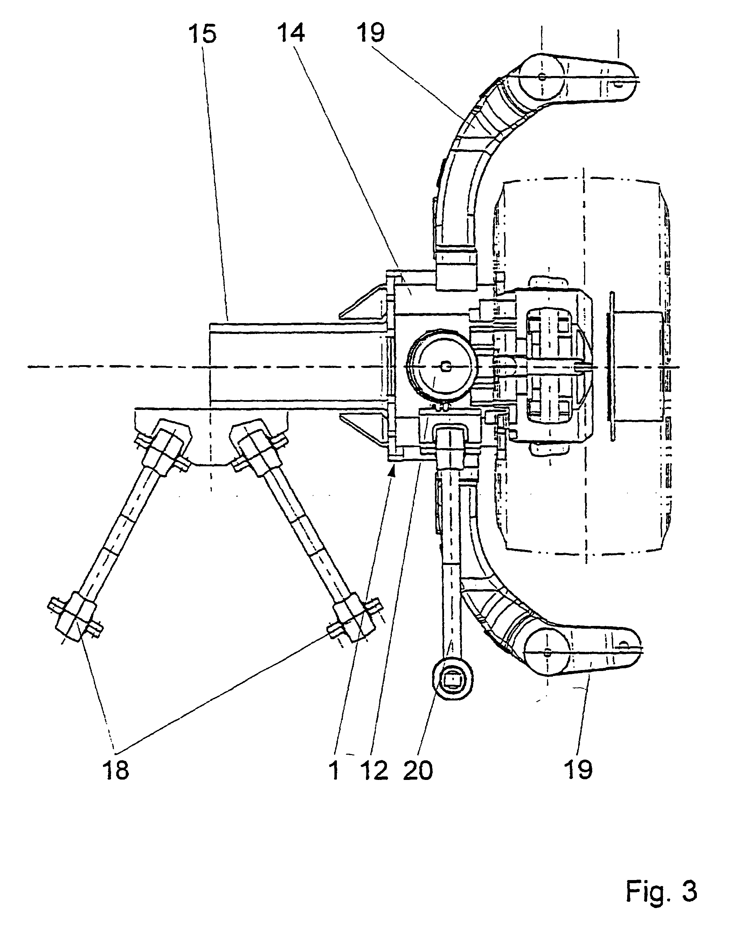

- Fig. 3: die Draufsicht einer Achse mit Aufhängungselementen der Achse sowie deren Lenker und

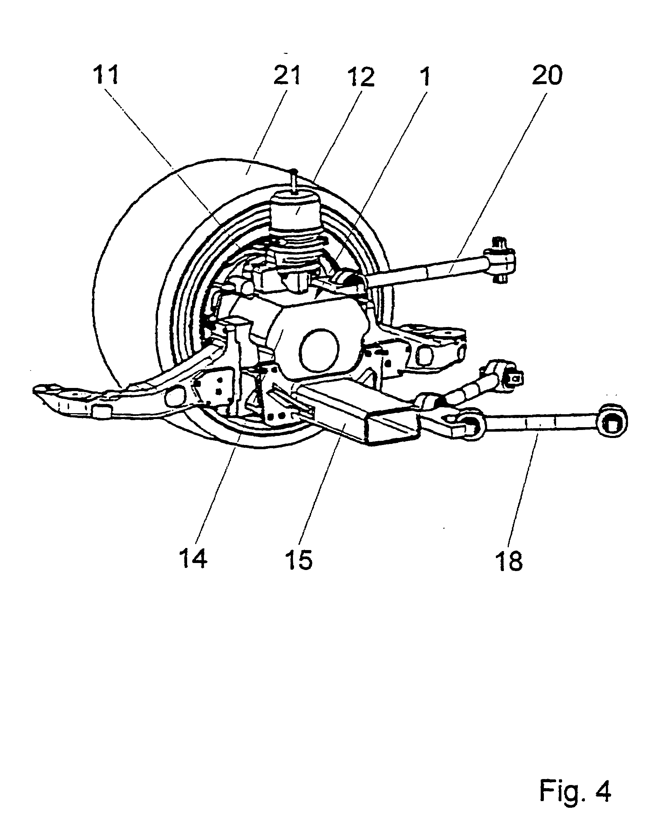

- Fig. 4: eine perspektivische Darstellung der Achse mit Achsbrücke und Aufhängungselementen sowie Lenkern.

Fig. 1:
   Ein elektrisch angetriebener Antriebsmotor 1 treibt über ein Antriebsrad 2 ein erstes Untersetzungsgetriebe 3 an. Das Hohlrad 4 des ersten Unterstzungsgetriebes 3 treibt ein inneres Zentralrad 5 eines zweiten Untersetzungsgetriebes 6 an. Das zweite Untersetzungsgetriebe 6 ist als Planetengetriebe ausgebildet, bei welchem das Hohlrad 7 drehfest mit dem Nabenträger 8 verbunden ist und dessen Planetenträger 9 den Abtrieb bildet und mit einer Felge 10 drehfest verbunden ist. Der Antriebsmotor 1 weist einen Achsversatz zur Radachse auf. Durch den Achsversatz des Antriebsmotors 1 entsteht zwischen Antriebsmotor 1 und Felge 10 ein Raum, in welchen eine Scheibenbremse 11 und der Großteil der Betätigungseinrichtung 12 der Scheibenbremse 11 eingebaut ist. Der Betätigungszylinder der Betätigungseinrichtung 12 ist nahezu rechtwinklig zur Radachse angeordnet, wobei der Betätigungszylinder stehend oder liegend angeordnet sein kann, um die Gesamtlänge des Antriebs kurz zu halten. Der Antriebsmotor 1 ist über Befestigungsmittel fest mit dem Nabenträger 8 verbunden, welche über die Lager 13 die Radkräfte aufnimmt. Indem das Gehäuse 14 des Antriebsmotors 1 einerseits mit dem Nabenträger 8 und andererseits mit einer Achsbrücke 15 verbunden ist, kann der Antriebsmotor 1 bis auf einen geringen Sicherheitsabstand zur Felge 10 versetzt werden, daß ein maximaler Achsabstand zur Radachse entsteht. Die Achsbrücke 15 und das Gehäuse 14 können auch einstückig ausgebildet sein.
Fig. 2:
   Das Antriebsrad 2 des ersten Untersetzungsgetriebes 3 kämmt einerseits mit dem Hohlrad 4 und andererseits mit zwei Zwischenrädern 16, welche wiederum über ein Zwischenrad 17 mit dem Hohlrad 4 verbunden sind. Indem beim Antriebsrad 2 das Drehmoment des Antriebsmotors 1 auf drei Stellen aufgeteilt wird, kann das erste Untersetzungsgetriebe 3 kompakt ausgeführt werden. Anstelle der Zwischenräder 16 kann auch nur ein Zwischenrad angeordnet sein, wobei sich dadurch das Drehmoment auf zwei Stellen aufteilt.
Fig. 3:
   Mit der Achsbrücke 15 sind zwei Schräglenker 18 verbunden. Die Anbindung der Schräglenker 18 an die Achsbrükke 15 kann mit Hilfe einer angeschweißten Verbindungsplatte erfolgen. Die Verbindungsplatte kann auch angegossen oder angeschraubt sein. Am Gehäuse 14 des Antriebsmotors 1 sind Aufhängungselemente 19 angebracht, welche über eine nicht dargestellte Federdämpfereinrichtung die Achse mit dem Fahrzeug verbinden. Die Aufhängungselemente 19 sind vorzugsweise als C-förmige Arme ausgebildet und können an das Gehäuse 14 angeschraubt, angeschweißt oder einstückig mit dem Gehäuse 14 ausgebildet sein. Oberhalb der Aufhängungselemente 19 ist ein Längslenker 20 am Gehäuse 14 angebracht, dessen Anbindung entweder angeschraubt oder einstückig mit dem Gehäuse 14 ausgeführt sein kann. Der Längslenker 20 kann auch unterhalb und die Schräglenker 18 oberhalb angeordnet werden.
Fig. 4:
   Die Achsbrücke 15, welche mit dem Gehäuse 14 des Antriebsmotors 1 verbunden oder einstückig mit dem Gehäuse 14 ausgeführt ist, ist vorzugsweise als Rechteckprofil ausgebildet. Die Betätigungseinrichtung 12 der Scheibenbremse 11 ist so ausgeführt, daß die radiale Erstreckung eines Reifens 21 nur unwesentlich überragt wird, wodurch ein nicht dargestellter Radkasten des Omnibusses nicht speziell ausgeformt sein muß. Soll die Achse nicht als starre Achse ausgeführt sein, so kann das Gehäuse 14 des Antriebsmotors 1 auch die Aufnahme der Schwenklagerung beinhalten, durch welche einen Lenkeinschlag erfolgen kann.

### Bezugszeichen

- 1: Antriebsmotor
- 2: Antriebsrad
- 3: erstes Untersetzungsgetriebe
- 4: Hohlrad
- 5: inneres Zentralrad
- 6: zweites Untersetzungsgetriebe
- 7: Hohlrad
- 8: Nabenträger
- 9: Planetenträger
- 10: Felge
- 11: Scheibenbremse
- 12: Betätigungseinrichtung
- 13: Lager
- 14: Gehäuse
- 15: Achsbrücke
- 16: Zwischenrad
- 17: Zwischenrad
- 18: Schräglenker
- 19: Aufhängungselemente
- 20: Längslenker
- 21: Reifen

## Patentansprüche

1. Achse mit einer unterhalb der Radachse angeordneten Achsbrücke (15) und Antriebsrädern (10) welche jeweils mit einem Antriebsmotor (1) mit einem Gehäuse (14), welches mit der Achsbrücke (15) in Verbindung steht, über mindestens ein Untersetzungsgetriebe (3) angetrieben werden, mit jeweils einer Bremse (11), welche mit dem Antriebsrad (10) in Verbindung steht, wobei eine Antriebsachse des Antriebsmotors (1) einen Abstand zur Radachse aufweist, und wobei das Gehäuse (14) des Antriebsmotors (1) mit der Achsbrücke (15) verbunden ist und Mittel zur Befestigung von Aufhängungselementen zur Befestigung der Achse an einem Fahrzeug aufweist, **dadurch gekennzeichnet, daß** die Bremse (11) als Scheibenbremse ausgebildet ist, welche sich weitgehend innerhalb des Antriebsrades befindet, das Untersetzungsgetriebe (3), welches mit einem Antriebsrad (2) des Antriebsmotors (1) in kämmender Verbindung steht, aus einem Hohlrad (4), welches mit dem Abtrieb in Verbindung steht und welches mit dem Antriebsrad (2) kämmt, und mindestens einem Zwischenrad (16) besteht, welches mit dem Antriebsrad (2) kämmt und welches über ein weiteres Zwischenrad (17) mit dem Hohlrad in Verbindung steht.

2. Achse mit einer unterhalb der Radachse angeordneten Achsbrücke (15) nach Anspruch 1, **dadurch gekennzeichnet, daß** die Achsbrücke (15) als Rechteckprofil ausgebildet ist.

3. Achse mit einer unterhalb der Radachse angeordneten Achsbrücke (15) nach Anspruch 1, **dadurch gekennzeichnet, daß** das Gehäuse (14) mit einem Längslenker (20) und die Achsbrücke (15) mit Schräglenkern (18) verbunden ist.

4. Achse mit einer unterhalb der Radachse angeordneten Achsbrücke (15) nach Anspruch 1, **dadurch gekennzeichnet, daß** bei lenkbaren Antriebsrädern das Motorgehäuse (14) die Aufnahme der Schwenklagerung beinhaltet.

5. Achse mit einer unterhalb der Radachse angeordneten Achsbrücke (15) nach Anspruch 1, **dadurch gekennzeichnet, daß** eine Betätigungseinrichtung (12) einer Scheibenbremse (11) in radialer Richtung einen Reifen (21) nur unwesentlich überragt.

6. Achse mit einer unterhalb der Radachse angeordneten Achsbrücke (15) nach Anspruch 1, **dadurch gekennzeichnet, daß** die Aufhängungselemente (19) als nahezu C-förmige Arme ausgebildet sind und einen Reifen (21) umgreifen.

## Claims

1. Axle having an axle bridge (15) disposed below the wheel axle and having driving wheels (10) driven in each case by a drive motor (1) having a housing (14), which is connected to the axle bridge (15), via at least one reduction gear (3), having in each case a brake (11), which is connected to the driving wheel (10), wherein a drive axle of the drive motor (1) is at a distance from the wheel axle and wherein the housing (14) of the drive motor (1) is connected to the axle bridge (15) and has means of fastening suspension elements for fastening the axle to a vehicle, **characterized in that** the brake (11) takes the form of a disc brake, which is situated extensively inside the driving wheel, the reduction gear (3), which is in mesh with an input gear wheel (2) of the drive motor (1), comprises a ring gear (4), which is connected to the output and which meshes with the input gear wheel (2), and at least one intermediate gear wheel (16), which meshes with the input gear wheel (2) and which is connected by a further intermediate gear wheel (17) to the ring gear.

2. Axle having an axle bridge (15) disposed below the wheel axle according to claim 1, **characterized in that** the axle bridge (15) takes the form of a rectangular section.

3. Axle having an axle bridge (15) disposed below the wheel axle according to claim 1, **characterized in that** the housing (14) is connected to a longitudinal control arm (20) and the axle bridge (15) is connected to tilted control arms (18).

4. Axle having an axle bridge (15) disposed below the wheel axle according to claim 1, **characterized in that**, in the case of steerable driving wheels, the motor housing (14) contains the receiver of the swivel bearing arrangement.

5. Axle having an axle bridge (15) disposed below the wheel axle according to claim 1, **characterized in that** an actuating device (12) of a disc brake (11) projects only insubstantially radially beyond a tyre (21).

6. Axle having an axle bridge (15) disposed below the wheel axle according to claim 1, **characterized in that** the suspension elements (19) take the form of almost C-shaped arms and embrace a tyre (21).

## Revendications

1. Essieu comprenant un pont d'essieu (15) et des roues motrices (10) qui sont entraînées chacune par un moteur d'entraînement (1) pourvu d'un carter (14) relié au pont d'essieu (15), et qui sont entraînées par l'intermédiaire d'au moins un réducteur (3), et comprennent chacune un frein (11) qui est relié à la roue motrice (10), dans lequel un axe d'entraînement du moteur d'entraînement (1) est à une certaine distance de l'axe des roues, et dans lequel le carter (14) du moteur d'entraînement (1) est relié au pont d'essieu (15) et comporte des moyens pour la fixation d'éléments de suspension destinés à assurer la fixation de l'essieu à un véhicule, **caractérisé en ce que** le frein (11) est constitué par un frein à disque qui se trouve en majeure partie à l'intérieur de la roue motrice, le réducteur (3) est en liaison par engrènement avec une roue d'entraînement (2) du moteur d'entraînement (1), une couronne à denture intérieure (4) est reliée à l'organe de sortie et engrène dans la roue d'entraînement (2), et au moins une roue intermédiaire (16) engrène dans la roue d'entraînement (2) et est en liaison avec la couronne à denture intérieure par l'intermédiaire d'une autre roue intermédiaire (17).

2. Essieu comprenant un pont d'essieu (15) disposé au-dessous de l'axe des roues, selon la revendication 1, **caractérisé en ce que** le pont d'essieu (15) est constitué par un profilé rectangulaire.

3. Essieu comprenant un pont d'essieu (15) disposé au-dessous de l'axe des roues, selon la revendication 1, **caractérisé en ce que** le carter (14) est relié à un bras longitudinal (20) et le pont d'essieu (15) à des bras obliques (18).

4. Essieu comprenant un pont d'essieu (15) disposé au-dessous de l'axe des roues, selon la revendication 1, **caractérisé en ce que**, dans le cas de roues motrices orientables, le carter (14) du moteur renferme le support du pivot.

5. Essieu comprenant un pont d'essieu (15) disposé au-dessous de l'axe des roues, selon la revendication 1, **caractérisé en ce qu'**un dispositif d'actionnement (12) d'un frein à disque (11) ne déborde dans la direction radiale d'un pneumatique (21) que d'une façon insignifiante.

6. Essieu comprenant un pont d'essieu (15) disposé au-dessous de l'axe des roues, selon la revendication 1, **caractérisé en ce que** les éléments de suspension (19) sont constitués par des bras à peu près en forme de C et ils encadrent un pneumatique (21).
